# EUROPEAN PATENT SPECIFICATION

(11) **EP 4 286 229 B1**
(45) Date of publication and mention of the grant of the patent: **25.06.2025**
(21) Application number: 23175657.8
(22) Date of filing: 26.05.2023
(51) Int. Cl.: B60T 13/26

(54) **A TRAILER BRAKING SYSTEM**
ANHÄNGERBREMSSYSTEM
SYSTÈME DE FREINAGE DE REMORQUE

(30) Priority: 27.05.2022 GB 202207830
(43) Date of publication of application: 06.12.2023
(73) Proprietor: Haldex Brake Products AB, 26124 Landskrona (SE)
(72) Inventor: HARRISON, Dudley, Lindley CV13 6DE (GB)
(74) Representative: Forresters IP LLP

(56) References cited:
- EP-A1- 1 789 296
- EP-A1- 2 462 012
- EP-A1- 2 750 949
- EP-A1- 3 150 450
- EP-A1- 3 481 685
- EP-A1- 3 967 562
- GB-A- 2 540 346

## Description

### FIELD

The invention relates to a trailer braking system. In embodiments, the invention is used in a trailer that is connectable to a towing vehicle.

### BACKGROUND

Heavy goods vehicle made up of a towing vehicle and a trailer are well known. It is extremely important that when such a vehicle is parked and /or a trailer is left without a towing vehicle, the vehicle / trailer are held stationary to reduce the risk of injuries and / or death to persons in the immediately vicinity. Park brakes achieve this to some extent as the spring brakes can be manually applied by a button present on the trailer side, which prevents any unwanted movement of the trailer.

EP3481685 discloses a vehicle braking system comprising a spring brake actuator having a spring brake chamber, a spring brake control assembly and an immobiliser valve which is movable between a brake release position in which the spring brake control assembly is operable to cause the flow of pressurised fluid into the spring brake chamber or to vent the spring brake chamber to a low pressure region, and an immobilise position in which the spring brake control assembly is operable to connect the spring brake chamber to a low pressure region but cannot be operated to cause the flow of pressurised fluid into the spring brake chamber.

Embodiments of the present invention aim to alleviate one or more of problems or drawbacks of known trailer systems.

### BRIEF DESCRIPTION OF THE INVENTION

According to an aspect of the invention we provide a trailer braking system including:
a supply line for connection to a continuous source of pressurised fluid;
   a spring brake, which has an apply position and a release position, and the spring brake moves to the release position when pressurised fluid is provided at or above a threshold;
a spring brake control valve, which controls the flow of fluid to the spring brake;
   an immobiliser having a brake release position and an immobilise position, which control the flow of pressurised fluid to the spring brake control valve,
      a shunt valve assembly having a shunt-enabled configuration and a shunt-disabled configuration, further characterised by
   in the shunt-disabled configuration, the immobiliser is operable to move both to the brake release position, in which the spring brake control valve is operable to cause the flow of pressurised fluid into the spring brake or to vent the spring brake chamber, and to the immobilise position, in which the spring brake control valve is not operable, and
   in the shunt-enabled configuration, the immobiliser is moved to the brake release position and the spring brake control valve permits pressurised fluid to the spring brake such that the spring brake is moved to the release position.

In at least one embodiment, the immobiliser may have a control port which is a fluid pressure operated actuator, such that when the fluid pressure at the control port is at or above a threshold the immobiliser moves to its brake release position.

The shunt valve assembly may include a shunt release valve having a first position which directly or indirectly connects a trailer reservoir to a control port of the immobiliser, and a second position which connects the control port of the immobiliser to atmosphere. Alternatively, the second position may connect the control port of the immobiliser to a line or port which pressurises on brake demand. Optionally the line which pressurises on brake demand is a control line or a delivery line or port from a service brake valve / modulator.

The position of the shunt release valve may be controlled by the presence of pressurised fluid in the supply line such that when the pressure in the supply line is at or above a threshold, the shunt release valve moves to its second position and, when the pressure in the supply line is below the threshold, the shunt release valve moves to its first position.

The shunt valve assembly may include a shunt valve which is operable to move between the shunt-enabled position and the shunt-disabled position, and is optionally manually operable.

The shunt valve may only operable to move to its shunt-enabled position when the supply line is disconnected and / or the fluid pressure in the supply line is below a threshold.

The trailer braking system may further include a trailer reservoir for holding a limited supply of pressurised fluid. When the shunt valve is moved to its shunt-enabled position, the trailer reservoir may be connected to the spring brake control valve.

The trailer braking system may further include a park valve which may be operable to move automatically to a parked position when the pressure in the supply line is below a threshold. The park valve may be connected via the shunt valve to the supply line.

The shunt valve may include a first inlet, a second inlet, an outlet, a manually operable button and a control port. The first inlet may be connected to the supply line. The second inlet may be connected to a or the trailer reservoir. The outlet may be connected to the immobiliser and the spring brake control valve. The control port may be connected to the supply line.

The spring brake control valve may include an inlet, an outlet, an exhaust and a control port. The inlet may be connected to the supply line and the outlet may be connected to the spring brake and the control port may be connected to the supply line via the immobiliser.

The spring brake control valve may include a biasing element to bias the valve to a first position, in which the outlet is connected to the exhaust. The control port may be fluid pressure actuated so that when the required pressure is present at the control port the valve is urged to a second position in which the inlet is connected to the outlet.

The immobiliser may include an inlet, an outlet and a control port. The inlet may be connected to the supply line and the outlet may be connected to the control port of the immobiliser and the control port of the spring brake control valve.

The immobiliser may include a biasing element to bias the immobiliser to a first position, in which an internal check valve prevents fluid flowing to the outlet. The outlet may also be connected to an exhaust. The control port may be fluid pressure actuated so that when the required pressure is present at the control port the valve is urged to a second position in which the inlet is connected to the outlet.

The trailer braking system may include an emergency braking override valve. The emergency braking override valve may include a first inlet and a second inlet, an outlet. The first inlet may be connected to the outlet of the immobiliser and the second inlet may be connected to the supply line, optionally via a trailer reservoir. The outlet may be connected to the control ports of the immobiliser and / or the spring brake control valve.

The emergency braking override valve may include a biasing element to bias the valve to a first position, in which the first inlet connects to the outlet. The emergency braking override valve may be electrically operable to urge the valve against the biasing element to a second position, in which the second inlet may be connected to the outlet.

### BRIEF DESCRIPTION OF THE FIGURES

Preferable embodiments will now be described, by way of example only, with reference to the accompanying drawings, in which:
FIGURE 1 is a schematic view of a trailer braking system;
FIGURE 2 is a schematic view of part of a trailer braking system;
FIGURES 3A and 3B are schematic views of parts of a trailer braking system in accordance with an embodiment; and
FIGURES 4A and 4B are schematic views of parts of a trailer braking system in accordance with another embodiment.

### DETAILED DESCRIPTION

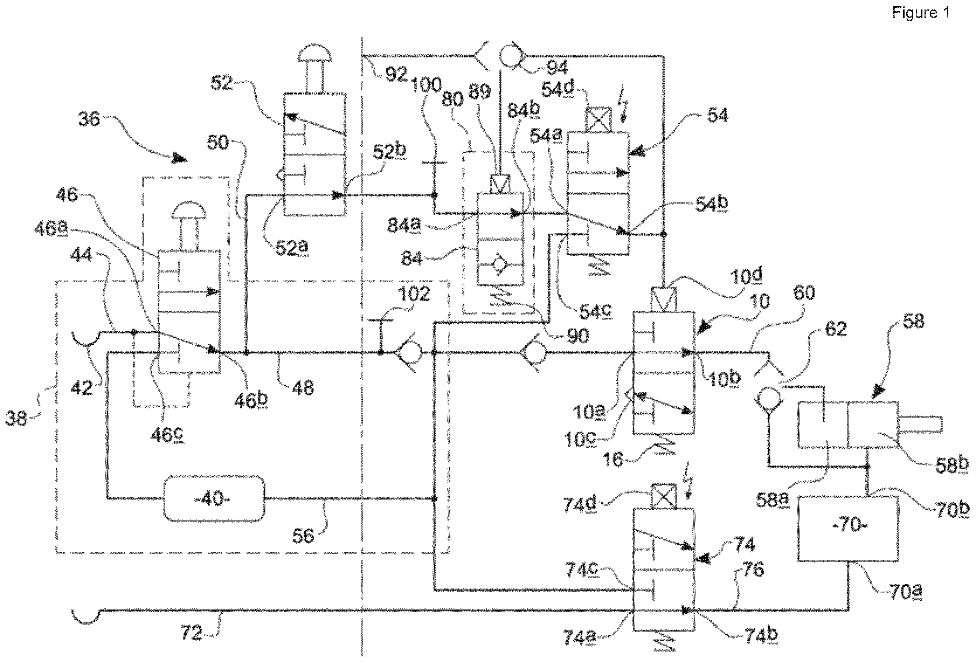

A braking system for a trailer vehicle is illustrated in figure 1. A brake actuator 58 is illustrated and has a spring brake chamber 58a and a service brake chamber 58b (both chambers are capable of imparting braking force on a connected wheel end). The spring brake (the braking force controlled by the spring brake chamber 58a) is applied when the fluid pressure (in this case, air) drops below a threshold and is released when the air pressure is at or above the threshold. In other words, the spring brake is on when there is low or no pressure in the chamber 58a and the spring brake is released (applying no braking force) when there is pressure present in the chamber 58a. The spring brake includes a resilient biasing element by means of which the braking force is applied when the pressure in the spring brake chamber 58a is below the predetermined level.

The service brake (the braking force controlled by the service brake chamber 58b) is applied according to the pressure present in the chamber 58b and is released when the air pressure is below a threshold. In other words, the service braking force developed is proportional to the pressure present in the chamber 58b.

The service brake is activated / released in accordance with driver (or electronic braking system (EBS)) demand. A control line 72 is connectable to the tractor and provides a fluid line to the driver's brake pedal. When the control line 72 is pressured (i.e. the driver has pressure applied to the brake pedal), a control valve assembly 70 (includes at least a modulator) operates to impart the desired pressure to the service brake chamber 58b (and, thus, the desired braking force is developed). The modulator has three configurations - a build state, a hold state and an exhaust state.

The build state is configured to increase the pressure delivered to the service brake chamber 58b. The hold state is configured to maintain a consistent pressure delivered. And, the exhaust state is configured to vent the pressure developed to atmosphere (and the delivered pressure to the chamber 58b drops to zero).

The modulator has a control port 70a for receipt of a fluid pressure braking demand signal (connected to the control line 72), a supply port (not shown) which is connected to a source of pressurised fluid, a delivery port 70b which is connected to the service brake chamber 58b, and an exhaust port (not shown) which vents to a low pressure region / atmosphere.

In the build state, the supply port is connected to the delivery port 70b whilst the exhaust port is closed (i.e. the pressure increases due to the connection to the supply port). In the hold state, the exhaust port and the supply ports are closed (i.e. the pressure is held stable with no additional pressure coming from the supply port). In the exhaust state, the delivery port 70b is connected to the exhaust port whilst the supply port is closed (i.e. the pressure will drop as all the air is vented).

Either the EBS or the driver (via the control line 72) can provide the control pressure at control port 70a of the control valve assembly 70 (along a service brake line 76). A brake apply valve 74 operates to connect either the control line 72 to the control valve assembly 70 or connects a constant supply of pressure from reservoir 40 to the control valve assembly 70. In this embodiment, the brake apply valve 74 is an electrically operated solenoid valve) and, in this example, is biased to connect the control line 72 to the control valve assembly 70). The brake apply valve 74 includes a first inlet 74a, an outlet 74b, a second inlet 74c and a control solenoid 74d. The control line 72 is connected to the first inlet 74a and the second inlet 74c is connected to the reservoir 40 via trailer reservoir supply line 56. The outlet 74b is connected to the control valve assembly 70.

The brake apply valve 74 is movable between a first position in which the first inlet 74a is connected to the outlet 74b, whilst the second inlet 74c is closed, and a second position in which the first inlet 74a is closed and the second inlet 74c is connected to the outlet 74b. The brake apply valve 74 is electrically operable, in this example, by means of a solenoid. Mechanical biasing means (in this example a spring) is provided to urge the brake apply valve 74 into the first position. Movement of the brake apply valve 74 from the first position to the second position is achieved by the supply of an electrical current to the solenoid 74d.

Thus, the driver demand pressure along the control line 72 is the default pressure delivered to the control valve assembly 70. However, the EBS can control the signal at port 74d in order to connect the trailer reservoir 40 the control valve assembly 70. This results in the EBS being operable to control the pressure going to the control valve assembly 70 - this is necessary so that the trailer can provide stability control automatically and independently of the driver demand for braking, for example.

The outlet 70b of the modulator 70 and an outlet from the spring brake control valve 10 are also connected to an anti-compounding valve 62. This is a two-way check valve which acts to connect whichever of the outlet of a spring brake control valve 10 (discussed below) or the outlet 70b of the modulator 70 is carrying the highest pressure to the spring brake chamber 58a. Such anti-compounding valves prevent the brakes being damaged by the simultaneous application of a braking force from the spring brake and service brake.

In embodiments, the spring brake control assembly includes a spring brake control valve 10. The spring brake control assembly may also include one or more of a park valve 52, a shunt valve 46 and an emergency braking override valve 54.

The spring brake control valve (SBCV) 10 operates to control the air pressure permitted to the spring brake chamber 58a. The SBCV 10 has an inlet 10a, an outlet 10b, an exhaust port 10c and a control port 10d. The inlet 10a connects to a source of pressurised fluid (coming via a shunt park assembly 38), the outlet 10b connects to the spring brake chamber 58a (via a spring brake line 60), and the exhaust port 10c is connected to a low pressure region (e.g. atmosphere).

The spring brake control valve 10 is movable between a first position where the inlet 10a is connected to the outlet 10b whilst the exhaust port 10c is closed, and a second position in which the outlet 10b is connected to the exhaust port 10c whilst the inlet 10a is closed.

The control port 10d is a fluid pressure operated actuator. The fluid pressure operated actuator being configured such that the supply of pressurised fluid to the control port 10d causes the spring brake control valve 10 to move to its first position. The spring brake control valve 10 also has a resilient biasing element 16 (e.g. a spring) which acts to urge the spring brake control valve 10 into its second position. When the fluid pressure at the control port 10d exceeds a pre-determined level / threshold, the spring brake control valve 10 moves positions, against the biasing force of the resilient biasing element 10, from the second position to the first position.

The inlet 10a is connected to the supply line 44. In this example, the inlet 10a of the spring brake control valve 10 is also connected to the pressurised fluid reservoir 40 and the supply line 44 (via connector 42) which connects to pressurised fluid supply from a tractor / towing vehicle. The inlet 10a of the spring brake control valve 10 is connected to the connector 42 via a supply line 44 which extends from the connector 42 through the shunt valve 46 to an emergency apply line 48 and a park line 50.

The emergency apply line 48 extends to the inlet 10a of the spring brake control valve 10, whilst the park line 50 extends through a park valve 52 (in the example in figure 1, the park valve 52 is manually operable but other park valve examples may have automatic or partially automatic operation) and an electrically operable emergency braking override valve 54 to the control port 10d.

Two one-way check valves are provided in the emergency apply line 48, both being oriented to allow flow of fluid from the shunt valve 46 to the spring brake control valve 10 but to prevent flow of fluid in the other direction along the emergency apply line 48, i.e. away from the spring brake control valve 10.

A trailer reservoir supply line 56 extends from the emergency apply line 48 in between the two one-way check valves to a pressurised fluid reservoir 40 mounted on the trailer. An outlet from the trailer reservoir 40 is connected to the shunt valve 46.

The shunt valve 46 includes a first inlet 46a, a second inlet 46c, an outlet 46b. The first inlet 46a is connected to the supply line 44, the second inlet 46c is connected to the reservoir 40 and the outlet 46b is connected to the inlet 10a of the SBCV 10. The shunt valve 46 has a first position in which the first inlet 46a is connected to the outlet 46b whilst the second inlet 46c is closed, and a second position in which the first inlet 46a is closed and the second inlet 46c is connected to the outlet 46b. In this example, the shunt valve 46 is adapted to be moved manually to the second position and automatically moves back to its first position when the supply line 44 is reconnected to a supply of pressure.

The park valve 52 includes an inlet 52a, an outlet 52b and an exhaust. The inlet 52a connects to the supply line 44 (in this embodiment, connects after the shunt valve 46, to emergency apply line 48). The outlet 52b connects to the control port 10d of the SBCV 10 via an immobiliser 80 and the emergency braking override valve 54 (both described in more detail below). The park valve 52 has a first position in which the inlet 52a is connected to the outlet 52b and a second position in which the inlet 52a is closed and the outlet 52b vents to a low pressure region (e.g. atmosphere). In this example, the park valve 52 is adapted to be moved manually between the first and second positions.

The emergency braking override valve 54 also has a first and second inlet 54a, 54c, and an outlet 54b. The first inlet 54a is connected to the park valve 52 (specifically, the outlet 52b). The second inlet 54c is connected to the emergency apply line 48 between the two one-way check valves. The outlet 54b is connected to the control port 10d of the spring brake control valve 10.

The emergency braking override valve 54 has a first position in which the inlet 54a is connected to the second port 54b, and the third port 54c is closed, and a second position in which the second inlet 54c is connected to the outlet 54b whilst the first inlet 54a is closed.

The emergency braking override valve 54 is electrically operable, in this example, by means of a solenoid 54d. Mechanical biasing means (in this example a spring) is provided to urge the emergency braking override valve 54 into the first position. In other words, the emergency braking override valve 54 is biased to its first position when there is no signal provided at the solenoid 54d. Movement of the emergency braking override valve 54 from the first position to the second position is achieved by the supply of an electrical current to the solenoid 54d.

The supply of electrical power to the emergency braking override valve 54 and the brake apply valve 74 is provided by a control unit (e.g. the trailer EBS control unit).

The immobiliser 80 is configured to prevent the trailer from rolling when it is disconnected from a towing vehicle. In general terms, the immobiliser 80 operates to move to an immobilise position automatically when pressure in the supply line 44 is lost (and the rest of the system vents, including the SBCV 10). Thus, the spring brake moves to a brake applied position and the immobiliser 80 also moves to the 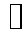 immobilised 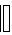 state when the pressure is lost in the supply line 44.

In more detail, the immobiliser 80 includes / is provided by an immobiliser valve 84. The immobiliser valve 84 has an inlet 84a, an outlet 84b and a control port 89. A resilient biasing element 90 (e.g. a spring) is provided to urge the immobiliser valve 84 to a default position when the control port 89 is not in use. The inlet 84a is connected to the supply line 44 via the shunt and park valves 46, 52. The outlet 84b is connected to the control port 10d of the SBCV 10 via the emergency braking override valve 54. The control port 89 is a fluid pressure operated actuator. The outlet 84b is also connected to the control port 89 via the emergency braking override valve 54.

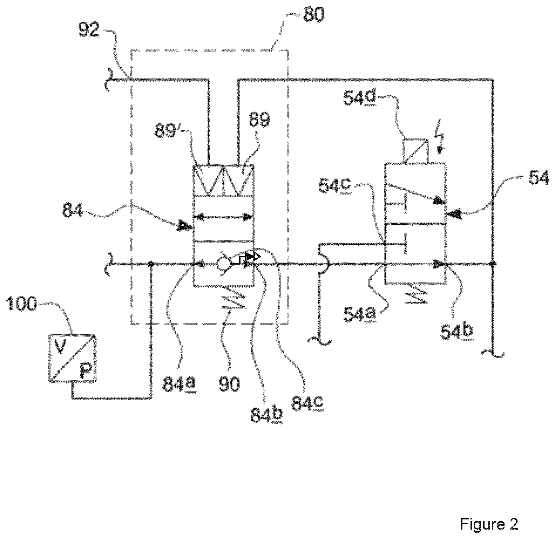

The immobiliser 80 has two states - a brake apply / active immobilisation state and a brake release / inactive state. The state illustrated in figure 2 is the inactive state in which the immobiliser 80 does not interfere or change the normal operation of the SBCV 10. The inlet 84a is connected to the outlet 84b - and thus, the supply line 44 pressure is permitted to flow to the control port 10d of the SBCV 10.

In the second state (the immobilisation state), the inlet 84a is connected to the outlet 84b via an internal check-valve. This prevents pressure on the supply line 44 from reaching the control port 10d of the SBCV 10 (and, thus, the spring brake cannot function to allow pressure through to the spring brake chamber 58a because the SBCV 10 is biased to vent by default). Furthermore, the biasing element 90 urges the immobiliser 80 to its immobilisation state, so once there is no fluid on the outlet 84b side of the valve, the immobiliser 80 cannot be repressurised merely by connecting the supply line 44 to a source of fluid.

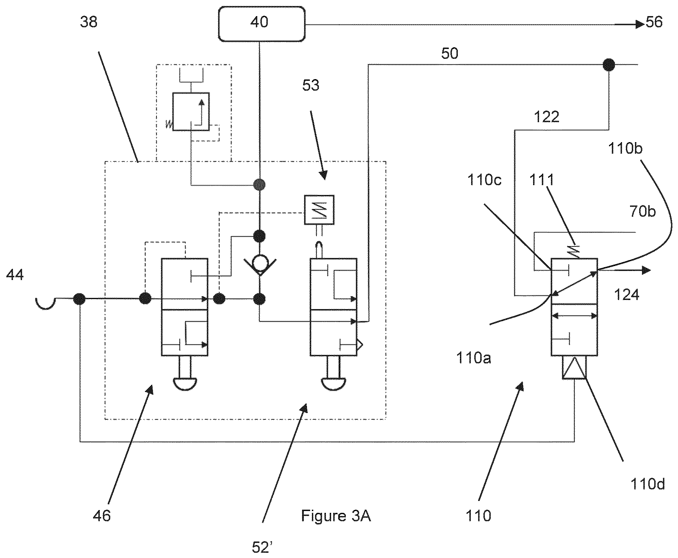

In some embodiments, the line connected to the control port 89 of the immobiliser valve 84 includes a two-way check-valve 94. The check-valve 94 has two inlets and a single outlet, which operates automatically to allow the inlet with the larger pressure present to pass the pressure on to the outlet. One inlet is connected to the outlet 84b of the immobiliser valve 84 (as discussed above) and the other is connected to a port 92. Port 92 can be connected to an external source of fluid pressure - thus, a manual external input could be used to pressure the immobiliser valve 84 to its released state. Alternatively (as is the case illustrated in figures 3A to 4B), the port 92 is connected to the delivery of the control valve assembly / modulator 70 for the service braking delivery (outlet / delivery port 70b).

An alternative immobiliser 80 is illustrated in figure 2. The difference in this system is there is no double check valve connecting to the control 89 of the immobiliser valve 84. Instead, the immobiliser valve 84 is provided with two fluid pressure operated actuators 89,89'. The first fluid pressure operated actuator 89 is connected as before (to the outlet 84b of the immobiliser valve 84 and, thus, to the control port 10d of the spring brake control valve 10) and operates in exactly the same way as above. In other words, it pushes the immobiliser valve 84 against the biasing force of the spring 90 into its brake release position when pressure is present at the control port 10d of the SBCV 10 / outlet 54b of the emergency braking override valve 54.

The second fluid pressure operated actuator 89' is connected to an alternative source of pressurised fluid via port 92 in the same way as is the second inlet of the two-way check valve 94 in system discussed above. Thus (as discussed above), the port 89' may be connected to the pressure delivered to the service brakes (i.e. from delivery port 70b). The second fluid pressure operated actuator 89' is configured to move the immobiliser valve 84 against the biasing force of the spring 90 into its brake release position when the pressure of fluid from the alternative source of pressurised fluid exceeds a pre-determined amount.

It should be appreciated that the system illustrated in figure 2 includes the same system components as discussed in relation to figure 1 (apart from the check-valve as discussed) but are not shown explicitly in figure 2.

It should also be appreciated that the immobiliser valve 84 may include an exhaust port attached to the check-valve 84c provided between the inlet 84a and the outlet 84b. Thus, when the immobiliser 80 moves to the active immobilisation state, the pressure on the outlet 84b side of the immobiliser valve 84 may automatically vent (and not be able to repressurise until the immobiliser 80 is operated to change states again). This is shown in figure 2.

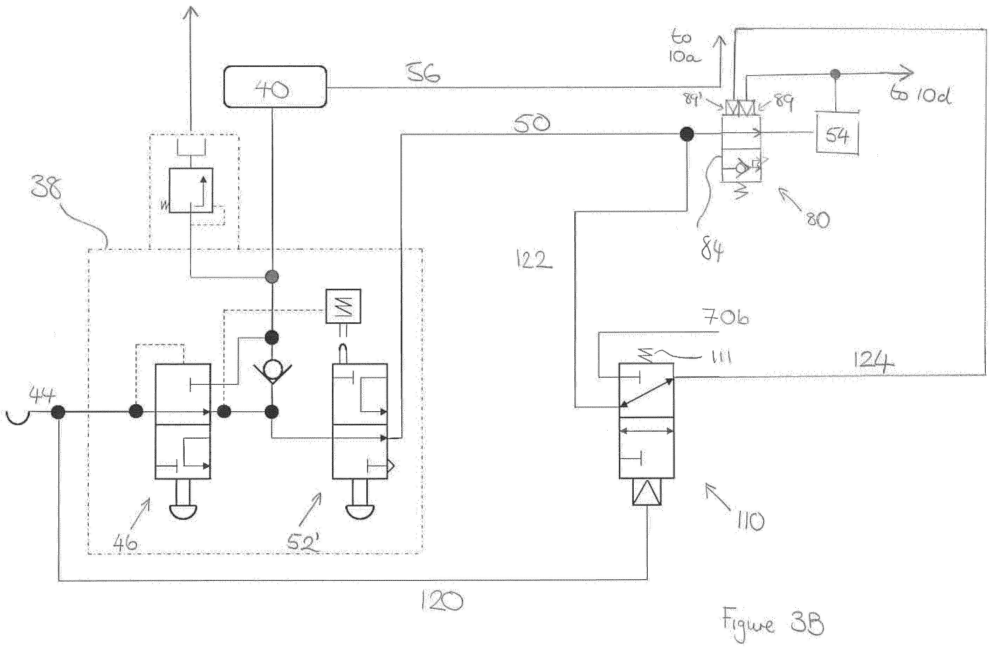

The ability to shunt a trailer when it is disconnected from a towing vehicle may be particularly important. Shunting a trailer involves moving it only a small distance (e.g. across a warehouse or trailer yard) and is often used to repark a trailer in a desired position in a yard after a towing vehicle has delivered a trailer to a different position in the yard and departed. The system illustrated on figure 1 does not allow a proper shunt operation because the immobiliser 80 cannot be released without power and / or a supply of fluid. Figures 3A and 3B illustrate a solution to this problem.

Figure 3A illustrates part of the braking system with a shunt release valve 110 and figure 3B shows additional components to show where the shunt release valve 110 is positioned within the wider braking system. It should be appreciated that the other components discussed above (such as the SBCV 10 and brake chamber 58) are present but not illustrated.

Essentially, the braking system includes a shunt valve assembly which provides a shunt-enabled configuration and a shunt-disabled configuration. When the shunt valve assembly is in the shunt-disabled configuration, the immobiliser 80 is operable to move both to the brake release position, in which the spring brake control valve 10 is operable to cause the flow of pressurised fluid into the spring brake 58 or to vent the spring brake, and to the immobilise position, in which the spring brake control valve 10 is not operable. In other words, the immobiliser 80 is free to operate normally. Further, when the shunt valve assembly is in the shunt-enabled configuration, the immobiliser 80 is moved to the brake release position and the spring brake control valve 10 permits pressurised fluid to the spring brake 58a such that the spring brake is moved to the release position. In other words, the immobiliser 80 is held in the brake release position despite there being no proper connection to a towing vehicle (on the supply line 44).

The shunt valve assembly includes the shunt valve 46 and the shunt release valve 110. As illustrated, the shunt valve 46 is also part of the park shunt assembly 38, alongside the park valve 52'. The park valve 52' has the same ports and is configured to provide the same positions as discussed above but the actuation is different (thus the reference number is provided with a prime symbol (') to indicate this difference). The park valve 52' provides an automatic parking functionality - the positions of the park valve 52' is controlled by pressure in the supply line (between the shunt valve 46 and the park valve 52'). A spring actuator 53 is provided (which is connected to the output of the shunt valve 46) which acts to move the park valve 52' depending on the pressure present. When the pressure is below a threshold, the actuator 53 moves the park valve 52' to its second position, which prevents pressure moving towards the immobiliser 80 and vents the immobiliser 80 (via the park line 50).

In other words, the park valve 52' will only maintain its first position if there is pressure in the supply line 44. The park valve 52' includes a manually operable button to manually move the valve 52'.

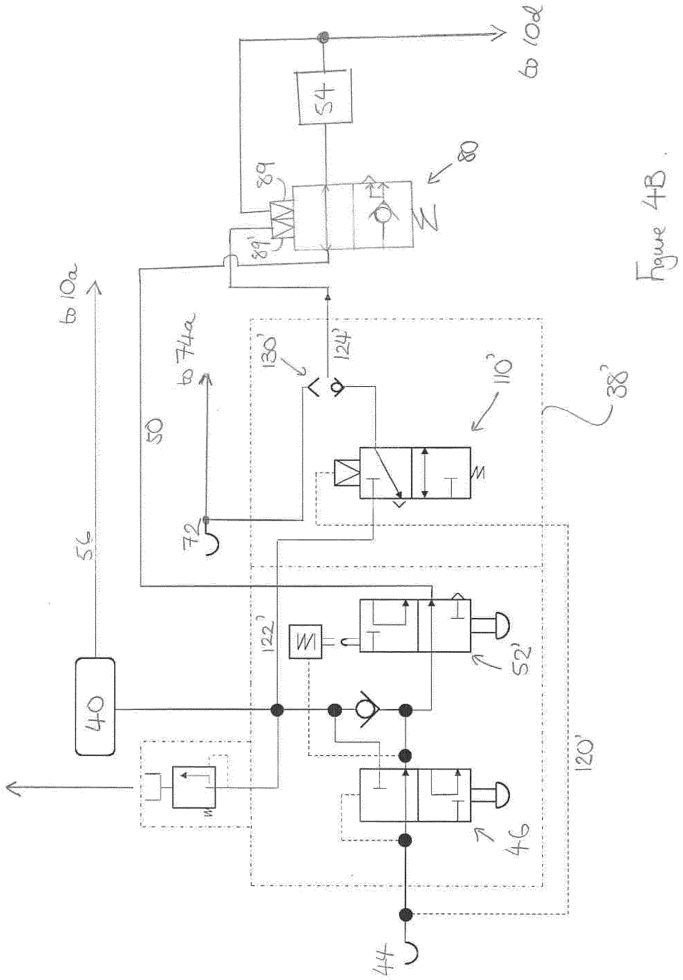

The shunt release valve 110 is configured to allow the trailer to shunt (as normal using the (manually operable) shunt valve 46) and release the immobiliser valve 84 (and, thus, allow the spring brakes to be released while the trailer is repositioned). In other words, the shunt release valve 110 has a first position which directly or indirectly connects the trailer reservoir 40 to the control port 89 of the immobiliser, and a second position which connects the control port 89 of the immobiliser to the delivery port 70b of the service brake modulator 70 (see figure 3B) or to a low pressure region (see figure 4B). In reality, both these options provide similar results because the delivery port 70b is not pressured unless service braking demand is present, so is often a low pressure line.

In embodiments (see figure 3A and 3B), the shunt release valve 110 includes a first port 110a, a second port 110b, a third port 110c and a fluid pressure operated control port 110d. The first port 110a is connected to the park line 50 between the park valve 52 and the immobiliser 80 (shown as line 122). The second port 110b is connected to port 89' of the immobiliser valve 84 (shown as line 124 on figure 3B). The third port 110c is connected to the delivery port 70b for the service brake demand (and, thus, a controlled low pressure region). The fluid pressure operated control port 110d is connected to the supply line 44 (prior to both the shunt valve 46 and the park valve 52') via line 120. The shunt release valve 110 also includes a mechanical biasing element 111.

As mentioned above, the shunt release valve 110 has two positions. In the first position, the first port 110a is connected to the second port 110b and the third port 110c is closed. In the second position, the second port 110b is connected to the third port 110c.

The biasing element 111 is configured to urge the shunt release valve 110 to its first position. In other words, when the trailer is not connected at the supply line 44 to a towing vehicle and the shunt valve 46 is activated, the pressure from the reservoir 40 is permitted to flow through to the control port 89' of the immobiliser valve 84 (thus, pressure is able to get through the immobiliser 80 to the SBCV 10 and, thus, to the spring brake chamber 58a). In other words, the position of the shunt release valve 110 is controlled by the presence of pressurised fluid in the supply line 44 such that when the pressure in the supply line 44 is at or above a threshold, the shunt release valve 110 moves to its second position and, when the pressure in the supply line 44 is below the threshold, the shunt release valve 110 moves to its first position. When pressure is present at the port 110d (i.e. when the supply line 44 is connected to a towing vehicle), the shunt release valve 110 is pressured (against the biasing element 111) to its second position. This causes the pressure at the control port 89' of the immobiliser valve 84 to vent to a low pressure region (e.g. atmosphere) and the immobiliser 80 must be released using the emergency braking override valve 54 (normal EBS release is discussed below).

It should be appreciated that the shunt valve 46 is moved to the shunt position manually. Further, the park valve 52' is also moved manually to the unparked position once the reservoir 40 pressure is permitted between the shunt valve 46 and park valve 52' (and reservoir pressure acts on the actuator 53 to maintain the park valve 52' in its first position).

Thus, the shunt release valve 110 permits the shunt valve 46 to control the immobiliser 80 as well as the spring brake control valve 10.

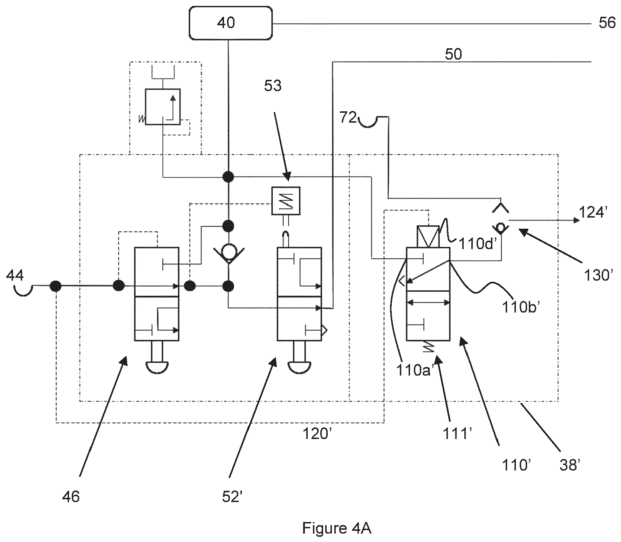

Figures 4A and 4B illustrate an alternative solution including an integrated shunt release valve 110'. In these figures, the standard components from the earlier braking system have the same reference numbers and the description relating to features of the integrated shunt release valve 110' have the same numbers but an additional prime to indicate they are part of the system in figures 4A and 4B.

In this example, the shunt release valve 110' is integrated within the shunt park assembly 38'. The shunt release valve 110' includes a first port 110a', a second port 110b', an exhaust / vent, and a fluid pressure operated control port 110d'. The first port 110a' is connected directly to the pressure from the fluid reservoir 40 (shown as line 122' on figure 4B). The second port 110b' is connected to port 89' of the immobiliser valve 84.

In some embodiments, the second port 110b' is connected to the immobiliser 84 via a two-way check-valve 130' (shown as line 124' on figure 4B). The check-valve 130' includes two inlets - one is connected to the shunt release valve 110' as discussed and the other is connected to the control line 72. Whichever inlet has the higher pressure is passed on to the control port 89' of the immobiliser valve 84.

The exhaust vents to a low pressure region / atmosphere. The fluid pressure operated control port 110d' is connected to the supply line 44 (prior to both the shunt valve 46 and the park valve 52) via line 120'. The shunt release valve 110' also includes a mechanical biasing element 111'.

The shunt release valve 110' has two positions. In its first position, the first port 110a' is closed and the second port 110b' is connected to the exhaust (illustrated in figures 4A and 4B). In its second position, the first port 110a' is connected to the second port 110b' and the exhaust is closed.

The biasing element 111' is configured to urge the shunt release valve 110' to its second position. In other words, when the trailer is not connected at the supply line 44 to a towing vehicle, the shunt release valve 110' is in its second position. When the shunt valve 46 is activated, the pressure from the reservoir 40 is permitted to flow through to the control port 89' of the immobiliser valve 84 (thus, pressure is able to get through the immobiliser 80 to the SBCV 10 and, thus, to the spring brake chamber 58a). If the two-way check-valve 130' is present, the pressure from the reservoir 40 is passed to the two-way check-valve 130', which in turn is delivered to the control port 89' (otherwise, the reservoir 40 is connected directly to the control port 89').

When pressure is present at the port 110d (i.e. when the supply line 44 is connected to a towing vehicle), the shunt release valve 110' is pressured (against the biasing element 111') to its first position. This causes the immobiliser valve 84 to vent to a low pressure region (e.g. atmosphere) and the immobiliser 80 must be released using the emergency braking override valve 54 (normal EBS release is discussed in more detail below).

The system operates in the following manner.

Under normal driving conditions, the connector 42 is pressurised by virtue of its connection to "the red line", i.e. the tractor based supply of pressurised fluid, and the shunt valve 46, park valve 52 and emergency braking override valve 54 are all in their first positions, as illustrated in the figure 1. The immobiliser 80 is in its brake release position. As a result, the control port 10d is connected to the connector 42 and is therefore pressurised, and, the spring brake control valve 10 is also in its first position. Pressurised fluid can therefore flow from the source of pressurised fluid 38, along the emergency apply line 48, and into the spring brake chamber 58a to release the spring brakes.

When the trailer is left without a towing vehicle, the connector 42 is disconnected from the external source of pressurised fluid and the supply line 44 thus exhausted to atmosphere. In the absence of pressurised fluid at the control port 10d of the spring brake control valve 10, the spring brake control valve 10 moves to its second (default / unpressurised) position. As a result, the inlet 10a is closed, and the outlet 10b is connected to the exhaust port 10c. The spring brake chamber 58a is thus vented to atmosphere via the exhaust port 10c, and the spring brake applied.

Further, when the connector 42 is disconnected from the supply of fluid from the towing vehicle, pressure is also lost at the control port 89 of the immobiliser valve 84 and the immobiliser 80 automatically moves to its active / immobilisation state. Thus, the trailer is automatically immobilised with the spring brakes applied.

Further, the park valve 52' will also automatically move to its second position and vent the connections to the immobiliser 80 and the SBCV 10 when pressure is lost in the supply line 44.

The same state may be be achieved without disconnecting the towing vehicle, by manually actuating the park valve 52. The button is manually pulled outwards and the park valve moves to its second position in which the park line 50 is connected to atmosphere. The park line 50 vents and the pressure is lost and resulting in the both the control port 10d of the SBCV 10 and the control port 89 of the immobiliser valve 84 losing pressure and moving to their default / biased positions.

Once the trailer is parked and disconnected (i.e. when the trailer is in a yard or the like without a towing vehicle), a shunt operation can be used to move the trailer short distances. The shunt functionality is designed to allow the spring brakes to be released while the trailer is moved but once left again the trailer will default back to its parked (and in this example, immobilised state). The shunt valve 46 is manually operable to provide a "shunt state" in the trailer. The manually operable button is pushed inwards to move the shunt valve 46 to its second position where the trailer reservoir 40 is connected to the park line 50. It should be appreciated that, in this example, the shunt valve 46 is only operable to move to its shunt-enabled position when the supply line 44 is disconnected and / or the fluid pressure in the supply line 44 is below a threshold. Once pressure is in the supply line 44, the shunt valve 46 is forced back to its shunt-disabled position.

Thus, when the shunt valve 46 is actuated and the park valve 52' actuated to its unparked position, pressure from the trailer reservoir 40 is permitted to travel towards the immobiliser 80. The shunt release valve 110, 110' is in its second position as there is no pressure from the supply line 44 and due to the biasing of element 111, 111'. In this position, the shunt release valve 110, 110' is operable to allow pressure to the control port 89' of the immobiliser valve 84.

The shunt release valve 110, 110' is connected to the control port of the immobiliser valve 89'. Thus, the immobiliser 80 is moved to its released / not immobilised position. In turn, this permits pressure to the spring brake control valve 10 (specifically to the control port 10d), which moves the SBCV 10 and to its second position in which pressure is permitted to the spring brake chamber 58a. The spring brakes are thus released and the trailer can be moved a short distance without any proper connections to a towing vehicle (i.e. without connection to the supply line 44 or the control line 72).

When the movement is complete, the shunt valve 46 is moved back to its original first position (i.e. disconnecting the trailer reservoir 40 from the park line 50, etc). The pressure is lost in the spring brake control valve 10 and in the immobiliser 80 and both return to their biased positions - i.e. the SBCV 10 vents the spring brake chamber 58a and the immobiliser 80 automatically moves to its immobilise position. The shunt valve 46 is also configured to move to its shunt-disabled position automatically when there is pressure in the supply line 44 (i.e. once a towing vehicle has been connected).

As soon as the supply line 44 is connected to a towing vehicle (and is pressurised), the shunt release valve 110, 110' is moved to its second position. Thus, it will no longer connect any source of fluid to the control port 89' of the immobiliser valve 84.

Both alternative embodiments of the shut release valve 110, 110' are configured to provide similar functionality. However, the connections between the valve 110, 110' are different, so there is slightly different operation within the general functionality provided.

In the embodiment in figures 3A and 3B, the shunt release valve 110 directs fluid from the park line 50 to the control port 89' of the immobiliser valve 84. Further, the pressure from the service brake modulator 70 may also be connected to the control port 89' (as discussed above, from delivery port 70b).

On reconnection to a towing vehicle, the following occurs to prepare the trailer for departure. Both the supply and control lines 44, 72 are connected to the towing vehicle - thus, the supply line 44 becomes pressurised. The shunt release valve 110 moves to its second position (which connects the delivery port 70b to the control port 89' of the immobiliser 80). As mentioned above, the pressure in the delivery port 70b will be low unless there is service braking demand, so the control port 89' is effectively connected to a low pressure region. However, the driver could depress the brake pedal in the towing vehicle to develop a service brake demand, which would result in pressure building at the control port 89' of the immobiliser 80 and connecting the supply line 44 to the SBCV 10.

Alternatively, once the tractor / trailer is ready to release the immobiliser 80, the control unit of the EBS provides a signal to the emergency braking override valve 54 (specifically a pulse to the solenoid 54d). The emergency braking override valve 54 connects the trailer reservoir 40 to the control port 89 of the immobiliser valve 84 (and the control port 10d of the SBCV 10). This allows both the immobiliser 80 and the SBCV 10 to move to their respective brake release positions and the supply line 44 pressure is permitted through to the SBCV 10 (and the spring brake chamber 58a) and the spring brakes are released.

The system could be modified to prevent the driver being able to use the brake pedal to release the immobiliser 80. In this case, the shunt release valve 110 includes a vent (and does not connect to the delivery port 70b). The immobiliser 80 can only be released by the above described action of the EBS (e.g. an electric release) and not by the service brake demand pressure. Thus, the system provides an "electric only" immobiliser release.

In the embodiment in figures 4A and 4B, the shunt release valve 110' directs fluid directly from the trailer reservoir 40 to the control port 89' of the immobiliser 80. If there is no two-way check-valve, the shunt release 110' works similarly to the "electric only" as the shunt release valve 110' either connects the reservoir to the control port 89' or the control port 89' is vented.

If a two-way check-valve 130' is present, the control line 72 may also connect to the control port 89' of the immobiliser 80. However, the control line 72 is only pressurised when braking demand is required (i.e. by pressure on the brake pedal in the towing vehicle), so does not influence the shunt functionality (because the control line 72 isn't connected to any towing vehicle).

Thus, the same functionality is provided as above with both an electric actuated immobiliser 80 release and pneumatic service brake demand actuated immobiliser 80 release. On reconnection to a towing vehicle, again both the supply and control lines 44, 72 are connected to the towing vehicle - thus, the supply line 44 becomes pressurised. The shunt release valve 110' moves to its second position (which connects the control line 72 to the control port 89' of the immobiliser 80).

Effectively, if the shunt release valve 110, 110' includes a connection to the delivery port 70b (or to the control line 72), the immobiliser 80 is releasable by a pneumatic service brake signal (the brake pedal being depressed). If there is no such connection, then the immobiliser 80 is only releasable by an electric signal from the EBS (to the emergency override valve 54)

Embodiments are advantageous because they combine the ability of a trailer to be shunted while maintaining an increased safety when the trailer is being connected to a towing vehicle. The shunt valve assembly allows the immobiliser 80 to be overridden only when the trailer is being moved in a shunt operation.

The (condition / state of the) shunt release valve 110, 110' is controlled by the supply line 44. If the supply line 44 is pressurised, the shunt release valve is inactive in terms of its effect on the immobiliser 80. If the supply line 44 is unpressurised, the shunt release valve 110, 110' is "active" and permits the immobiliser 80 to be released outside of the normal requirements for releasing it (i.e. the shunt overrides the park brake and the immobiliser to allow the springs to be released).

When the shunt operation is complete, the immobiliser 80 reverts back to an immobilised state in which the spring brakes cannot be released without an EBS signal and / orservice brake application (as discussed above). When the towing vehicle is connected to the supply and the control line, the immobiliser 80 is maintained in the immobilised position until the EBS sends a signal to release it (in the illustrated example, using the electrically operated emergency braking override valve 54) or the brake pedal is used. Thus, the EBS and / or the driver can complete any safety protocols and procedures necessary to ensure the systems are operating safely before the spring brakes are released.

## Claims

1. A trailer braking system including:
a supply line (44) for connection to a continuous source of pressurised fluid;
a spring brake (58), which has an apply position and a release position, and the spring brake (58) moves to the release position when pressurised fluid is provided at or above a threshold;
a spring brake control valve (10), which controls the flow of fluid to the spring brake (58);
an immobiliser (80) having a brake release position and an immobilise position, which control the flow of pressurised fluid to the spring brake control valve (10),
a shunt valve assembly having a shunt-enabled configuration and a shunt-disabled configuration, further **characterised by**
in the shunt-disabled configuration, the immobiliser (80) is operable to move both to the brake release position, in which the spring brake control valve (10) is operable to cause the flow of pressurised fluid into the spring brake (58) or to vent the spring brake chamber (58a), and to the immobilise position, in which the spring brake control valve (10) is not operable, and
in the shunt-enabled configuration, the immobiliser (80) is moved to the brake release position and the spring brake control valve (10) permits pressurised fluid to the spring brake (58) such that the spring brake (58) is moved to the release position.

2. A trailer braking system according to claim 1 wherein the immobiliser (80) has a control port (89) which is a fluid pressure operated actuator (89'), such that when the fluid pressure at the control port (89) is at or above a threshold the immobiliser (80) moves to its brake release position.

3. A trailer braking system according to any one of the preceding claims wherein the shunt valve assembly includes a shunt release valve (110) having a first and a second position that is controlled by pressure in the supply line (44).

4. A trailer braking system according to claim 3 wherein in the first position, the shunt release valve (110)directly or indirectly connects a trailer reservoir (40) to a control port (89) of the immobiliser (80), and in the second position, the shunt release valve (110) connects the control port (89) of the immobiliser (80) to a low pressure region / atmosphere or a line or port which pressurises on brake demand, optionally wherein the line which pressurises on brake demand is a control line (72) or delivery from a service brake valve / modulator (70).

5. A trailer braking system according to claim 3 or 4 wherein the position of the shunt release valve (110) is controlled by the presence of pressurised fluid in the supply line (44) such that when the pressure in the supply line (44) is at or above a threshold, the shunt release valve (110) moves to its second position and, when the pressure in the supply line (44) is below the threshold, the shunt release valve (110) moves to its first position.

6. A trailer braking system according to any one of the preceding claims wherein the shunt valve assembly includes a shunt valve (46) which is operable to move between the shunt-enabled position and the shunt-disabled position, and is optionally manually operable.

7. A trailer braking system according to claim 6 wherein the shunt valve (46) is only operable to move to its shunt-enabled position when the supply line (44) is disconnected and / or the fluid pressure in the supply line (44) is below a threshold.

8. A trailer braking system according to claims 6 or 7 wherein the system further includes a trailer reservoir (40) for holding a limited supply of pressurised fluid and when the shunt valve (46) is moved to its shunt-enabled position, the trailer reservoir (40) is connected to the spring brake control valve (10).

9. A trailer braking system according to any one of the preceding claims including a park valve (52) which is operable to move automatically to a parked position when the pressure in the supply line (44) is below a threshold and optionally
wherein the park valve (52) is connected via the shunt valve (46) to the supply line (44).

10. A trailer braking system according to any one of claims 6 to 9 wherein the shunt valve (46) includes a first inlet (46a), a second inlet (46c), an outlet (46b), a manually operable button and a control port, wherein the first inlet (46a) is connected to the supply line (44), the second inlet (46c) is connected to a or the trailer reservoir (40), and the outlet (46b) is connected to the immobiliser (80) and the spring brake control valve (10) and the control port is connected to the supply line (44).

11. A trailer braking system according to any one of the preceding claims wherein the spring brake control valve (10) includes an inlet (10a), an outlet (10b), an exhaust (10c) and a control port (10d), wherein the inlet (10a) is connected to the supply line (44) and the outlet (10b) connected to the spring brake (58) and the control port (10d) is connected to the supply line (44) via the immobiliser (80), and optionally
wherein the spring brake control valve (10) includes a biasing element (16) to bias the valve (10) to a first position, in which the outlet (10b) is connected to the exhaust (10c), and the control port (10d) is fluid pressure actuated so that when the required pressure is present at the control port (10d) the valve (10) is urged to a second position in which the inlet (10a) is connected to the outlet (10b).

12. A trailer braking system according to any one of the preceding claims wherein the immobiliser (80) includes an inlet (84a), an outlet (84b) and a control port (89), wherein the inlet (84a) is connected to the supply line (44) and the outlet (84b) is connected to the control port (89) of the immobiliser and the control port (10d) of the spring brake control valve (10), and optionally
wherein the immobiliser (80) includes a biasing element (90) to bias the immobiliser (80) to a first position, in which an internal check valve (84c) prevents fluid flowing to the outlet (84b) and, optionally the outlet (84b) is connected to an exhaust, and the control port (89) is fluid pressure actuated so that when the required pressure is present at the control port (89) the valve is urged to a second position in which the inlet (84a) is connected to the outlet (84b).

13. A trailer braking system according to claim 12 including an emergency braking override valve (54) including a first inlet (54a) and a second inlet (54c), an outlet (54b), wherein the first inlet (54a) is connected to the outlet (84b) of the immobiliser and the second inlet (54c) is connected to the supply line (44), optionally via a trailer reservoir (40), and the outlet (54b) is connected to the control ports of the immobiliser (89, 89') and the spring brake control valve (10d), and optionally
wherein the emergency braking override valve (54) includes a biasing element to bias the valve to a first position, in which the first inlet (54a) connects to the outlet (54b), and is electrically operable to urge the valve against the biasing element to a second position, in which the second inlet (54c) is connected to the outlet (54b).

14. A trailer including a trailer braking system according to any one of claims 1 to 13.

## Patentansprüche

1. Anhängerbremssystem, das aufweist:
eine Versorgungsleitung (44) zum Verbinden mit einer kontinuierlichen Quelle von unter Druck stehendem Fluid;
eine Federspeicherbremse (58), die eine Andrückstellung und eine Lösestellung hat und wobei die Federspeicherbremse (58) sich in die Lösestellung bewegt, wenn ein unter Druck stehendes Fluid auf oder über einem Schwellenwert bereitgestellt wird;
ein Steuermodul der Federspeicherbremse (10), das den Durchfluss von Fluid zur Federspeicherbremse (58) steuert;
eine Wegfahrsperre (80) mit einer Bremsenlösestellung und einer Sperrstellung, die den Durchfluss von unter Druck stehendem Fluid zum Steuermodul der Federspeicherbremse (10) steuern,
eine Rangierventilanordnung mit einer zum Rangieren gelösten Konfiguration und einer das Rangieren sperrenden Konfiguration, ferner **dadurch gekennzeichnet, dass**
in der das Rangieren sperrenden Konfiguration die Wegfahrsperre (80) betätigbar ist, um sich sowohl in die Bremsenlösestellung, in der das Steuermodul der Federspeicherbremse (10) betätigbar ist, um den Durchfluss von unter Druck stehendem Fluid in die Federspeicherbremse (58) zu bewirken oder die Federspeicherbremskammer (58a) zu entlüften, als auch in die Sperrstellung, in der das Steuermodul der Federspeicherbremse (10) nicht betätigbar ist, zu bewegen, und
in der zum Rangieren gelösten Konfiguration die Wegfahrsperre (80) in die Bremslösestellung bewegt wird und das Steuermodul der Federspeicherbremse (10) unter Druck stehendes Fluid zu der Federspeicherbremse (58) durchlässt, so dass die Federspeicherbremse (58) in die Lösestellung bewegt wird.

2. Anhängerbremssystem nach Anspruch 1, wobei die Wegfahrsperre (80) einen Steueranschluss (89) hat, der ein durch Fluiddruck betätigter Bremszylinder (89') ist, so dass, wenn der Fluiddruck am Steueranschluss (89) auf oder über einem Schwellenwert ist, die Wegfahrsperre (80) sich in ihre Bremsenlösestellung bewegt.

3. Anhängerbremssystem nach einem der vorhergehenden Ansprüche, wobei die Rangierventilanordnung ein Rangierlöseventil (110) mit einer ersten und einer zweiten Stellung aufweist, das durch Druck in der Versorgungsleitung (44) gesteuert wird.

4. Anhängerbremssystem nach Anspruch 3, wobei in der ersten Stellung das Rangierlöseventil (110) einen Anhängerbehälter (40) direkt oder indirekt mit einem Steueranschluss (89) der Wegfahrsperre (80) verbindet und in der zweiten Stellung das Rangierlöseventil (110) den Steueranschluss (89) der Wegfahrsperre (80) mit einer Niederdruckregion/Atmosphäre oder einer Leitung oder einem Anschluss, die/der bei Bremsanforderung mit Druck beaufschlagt wird, wahlweise, wobei die Leitung, die bei Bremsanforderung mit Druck beaufschlagt wird, eine Steuerleitung (72) oder Zuführung von einem Betriebsbremsventil/-modulator (70) ist.

5. Anhängerbremssystem nach Anspruch 3 oder 4, wobei die Stellung des Rangierlöseventils (110) durch das Vorhandensein von unter Druck stehendem Fluid in der Versorgungsleitung (44) gesteuert wird, so dass, wenn der Druck in der Versorgungsleitung (44) auf oder über einem Schwellenwert liegt, das Rangierlöseventil (110) sich in seine zweite Stellung bewegt, und, wenn der Druck in der Versorgungsleitung (44) unter dem Schwellenwert liegt, das Rangierlöseventil (110) sich in seine erste Stellung bewegt.

6. Anhängerbremssystem nach einem der vorhergehenden Ansprüche, wobei die Rangierventilanordnung ein Rangierventil (46) aufweist, das zum Bewegen zwischen der zum Rangieren gelösten Stellung und der das Rangieren sperrenden Stellung funktionell ist und wahlweise manuell bedienbar ist.

7. Anhängerbremssystem nach Anspruch 6, wobei das Rangierventil (46) nur zum Bewegen in seine zum Rangieren gelöste Stellung funktionell ist, wenn die Versorgungsleitung (44) unterbrochen ist und/oder der Fluiddruck in der Versorgungsleitung (44) unter einem Schwellenwert ist.

8. Anhängerbremssystem nach Anspruch 6 oder 7, wobei das System ferner einen Anhängerbehälter (40) zum Aufnehmen eines begrenzten Vorrats an unter Druck stehendem Fluid aufweist und, wenn das Rangierventil (46) in seine zum Rangieren gelöste Stellung bewegt wird, der Anhängerbehälter (40) mit dem Steuermodul der Federspeicherbremse (10) verbunden ist.

9. Anhängerbremssystem nach einem der vorhergehenden Ansprüche, das ein Parkventil (52) aufweist, das zum automatischen Bewegen in eine Parkstellung, wenn der Druck in der Versorgungsleitung (44) unter einem Schwellenwert ist, funktionell ist, und, wahlweise,
wobei das Parkventil (52) über das Rangierventil (46) mit der Versorgungsleitung (44) verbunden ist.

10. Anhängerbremssystem nach einem der Ansprüche 6 bis 9, wobei das Rangierventil (46) einen ersten Einlass (46a), einen zweiten Einlass (46c), einen Auslass (46b), einen manuell bedienbaren Knopf und einen Steueranschluss aufweist, wobei der erste Einlass (46a) mit der Versorgungsleitung (44) verbunden ist, der zweite Einlass (46c) mit einem oder dem Anhängerbehälter (40) verbunden ist und der Auslass (46b) mit der Wegfahrsperre (80) und dem Steuermodul der Federspeicherbremse (10) verbunden ist und der Steueranschluss mit der Versorgungsleitung (44) verbunden ist.

11. Anhängerbremssystem nach einem der vorhergehenden Ansprüche, wobei das Steuermodul der Federspeicherbremse (10) einen Einlass (10a), einen Auslass (10b), einen Austritt (10c) und einen Steueranschluss (10d) aufweist, wobei der Einlass (10a) mit der Versorgungsleitung (44) verbunden ist und der Auslass (10b) mit der Federspeicherbremse (58) verbunden ist und der Steueranschluss (10d) über die Wegfahrsperre (80) mit der Versorgungsleitung (44) verbunden ist und, wahlweise,
wobei das Steuermodul der Federspeicherbremse (10) ein Vorspannelement (16) zum Vorspannen des Ventils (10) in eine erste Stellung aufweist, in der der Auslass (10b) mit dem Austritt (10c) verbunden ist und der Steueranschluss (10d) fluiddruckbetätigt ist, so dass, wenn der erforderliche Druck am Steueranschluss (10d) vorhanden ist, das Ventil (10) in eine zweite Stellung gedrängt wird, in der der Einlass(10a) mit dem Auslass (10b) verbunden ist.

12. Anhängerbremssystem nach einem der vorhergehenden Ansprüche, wobei die Wegfahrsperre (80) einen Einlass (84a), einen Auslass (84b) und einen Steueranschluss (89) aufweist, wobei der Einlass (84a) mit der Versorgungsleitung (44) verbunden ist und der Auslass (84b) mit dem Steueranschluss (89) der Wegfahrsperre und dem Steueranschluss (10d) des Steuermoduls der Federspeicherbremse (10) verbunden ist und, wahlweise,
wobei die Wegfahrsperre (80) ein Vorspannelement (90) zum Vorspannen der Wegfahrsperre (80) in eine erste Stellung aufweist, in der ein inneres Rückschlagventil (84c) verhindert, dass Fluid zum Auslass (84b) fließt, und, wahlweise, der Auslass (84b) mit einem Austritt verbunden ist und der Steueranschluss (89) fluiddruckbetätigt ist, so dass, wenn der erforderliche Druck am Steueranschluss (89) vorhanden ist, das Ventil in eine zweite Stellung gedrängt wird, in der der Einlass (84a) mit dem Auslass (84b) verbunden ist.

13. Anhängerbremssystem nach Anspruch 12, das ein Notbrems-Übersteuerungsventil (54) aufweist, das einen ersten Einlass (54a) und einen zweiten Einlass (54c), einen Auslass (54b) aufweist, wobei der erste Einlass (54a) mit dem Auslass (84b) der Wegfahrsperre verbunden ist und der zweite Einlass (54c) mit der Versorgungsleitung (44) verbunden ist, wahlweise über einen Anhängerbehälter (40), und der Auslass (54b) mit dem Steueranschluss der Wegfahrsperre (89, 89') und dem Steuermodul der Federspeicherbremse (10d) verbunden ist, und, wahlweise,
wobei das Notbrems-Übersteuerungsventil (54) ein Vorspannelement zum Vorspannen des Ventils in eine erste Stellung aufweist, in der der erste Einlass (54a) mit dem Auslass (54b) verbunden ist, und elektrisch betätigbar ist, um das Ventil gegen das Vorspannelement in eine zweite Stellung zu drängen, in der der zweite Einlass (54c) mit dem Auslass (54b) verbunden ist.

14. Anhänger, der ein Anhängerbremssystem nach einem der Ansprüche 1 bis 13 aufweist.

## Revendications

1. Système de freinage de remorque, comprenant :
une conduite d'alimentation (44) destinée à être reliée à une source continue de fluide sous pression ;
un frein à ressort (58), qui possède une position de serrage et une position de desserrage, le frein à ressort (58) se déplaçant dans la position de desserrage lorsqu'un fluide sous pression est fourni à un niveau supérieur ou égal à un seuil ;
une soupape de commande de frein à ressort (10), qui commande l'écoulement de fluide vers le frein à ressort (58) ;
un moyen d'immobilisation (80) possédant une position de desserrage de frein et une position d'immobilisation, qui commande l'écoulement de fluide sous pression vers la soupape de commande de frein à ressort (10) ;
un ensemble soupape de dérivation possédant une configuration à dérivation activée et une configuration à dérivation désactivée,
le système de freinage de remorque étant en outre **caractérisé en ce que** :
dans la configuration à dérivation désactivée, le moyen d'immobilisation (80) est actionnable pour se déplacer à la fois dans la position de desserrage de frein, dans laquelle la soupape de commande de frein à ressort (10) est actionnable pour provoquer l'écoulement de fluide sous pression dans le frein à ressort (58) ou pour mettre à l'air libre la chambre de frein à ressort (58a), et dans la position d'immobilisation, dans laquelle la soupape de commande de frein à ressort (10) n'est pas actionnable, et
dans la configuration à dérivation activée, le moyen d'immobilisation (80) est déplacé vers la position de desserrage de frein et la soupape de commande de frein à ressort (10) permet l'écoulement de fluide sous pression vers le frein à ressort (58) de telle sorte que le frein à ressort (58) soit déplacé dans la position de desserrage.

2. Système de freinage de remorque selon la revendication 1, dans lequel le moyen d'immobilisation (80) comporte un orifice de commande (89) qui est un actionneur actionné par pression de fluide (89'), de telle sorte que lorsque la pression de fluide au niveau de l'orifice de commande (89) est supérieure ou égale à un seuil, le moyen d'immobilisation (80) se déplace dans sa position de desserrage de frein.

3. Système de freinage de remorque selon l'une quelconque des revendications précédentes, dans lequel l'ensemble soupape de dérivation comprend une soupape de libération de dérivation (110) possédant des première et seconde positions qui sont commandées par pression dans la conduite d'alimentation (44).

4. Système de freinage de remorque selon la revendication 3, dans lequel, dans la première position, la soupape de libération de dérivation (110) relie directement ou indirectement un réservoir de remorque (40) à un orifice de commande (89) du moyen d'immobilisation (80), et dans la seconde position, la soupape de libération de dérivation (110) relie l'orifice de commande (89) du moyen d'immobilisation (80) à une région de basse pression ou à l'atmosphère ou bien à une conduite ou un orifice qui se met sous pression à la demande du frein, la conduite qui se met sous pression à la demande du frein étant éventuellement une conduite de commande (72) ou de distribution depuis une soupape de frein de service ou un modulateur (70).

5. Système de freinage de remorque selon la revendication 3 ou 4, dans lequel la position de la soupape de libération de dérivation (110) est commandée par la présence de fluide sous pression dans la conduite d'alimentation (44) de telle sorte que, lorsque la pression dans la conduite d'alimentation (44) est supérieure ou égale à un seuil, la soupape de libération de dérivation (110) se déplace dans sa deuxième position et, lorsque la pression dans la conduite d'alimentation (44) est inférieure au seuil, la soupape de libération de dérivation (110) se déplace dans sa première position.

6. Système de freinage de remorque selon l'une quelconque des revendications précédentes, dans lequel l'ensemble soupape de dérivation comprend une soupape de dérivation (46) qui est actionnable pour se déplacer entre la position à dérivation activée et la position à dérivation désactivée, et qui est éventuellement actionnable manuellement.

7. Système de freinage de remorque selon la revendication 6, dans lequel la soupape de dérivation (46) est uniquement actionnable pour se déplacer dans sa position à dérivation activée lorsque la conduite d'alimentation (44) est déconnectée et/ou que la pression de fluide dans la conduite d'alimentation (44) est inférieure à un seuil.

8. Système de freinage de remorque selon la revendication 6 ou 7, le système comprenant en outre un réservoir de remorque (40) destiné à contenir une réserve limitée de fluide sous pression, le réservoir de remorque (40) étant relié à la soupape de commande de frein à ressort (10) lorsque la soupape de dérivation (46) est déplacée dans sa position à dérivation activée.

9. Système de freinage de remorque selon l'une quelconque des revendications précédentes, comprenant une soupape de stationnement (52) qui est actionnable pour se déplacer automatiquement dans une position de stationnement lorsque la pression dans la conduite d'alimentation (44) est inférieure à un seuil, et éventuellement
la soupape de stationnement (52) étant reliée à la conduite d'alimentation (44) par l'intermédiaire de la soupape de dérivation (46).

10. Système de freinage de remorque selon l'une quelconque des revendications 6 à 9, dans lequel la soupape de dérivation (46) comprend une première entrée (46a), une seconde entrée (46c), une sortie (46b), un bouton actionnable manuellement et un orifice de commande, la première entrée (46a) étant reliée à la conduite d'alimentation (44), la seconde entrée (46c) étant reliée à un ou au réservoir de remorque (40), la sortie (46b) étant reliée au moyen d'immobilisation (80) et à la soupape de commande de frein à ressort (10), et l'orifice de commande étant relié à la conduite d'alimentation (44).

11. Système de freinage de remorque selon l'une quelconque des revendications précédentes, dans lequel la soupape de commande de frein à ressort (10) comprend une entrée (10a), une sortie (10b), un échappement (10c) et un orifice de commande (10d), l'entrée (10a) étant reliée à la conduite d'alimentation (44), la sortie (10b) étant reliée au frein à ressort (58) et l'orifice de commande (10d) étant relié à la conduite d'alimentation (44) par l'intermédiaire du moyen d'immobilisation (80), et éventuellement
dans lequel la soupape de commande de frein à ressort (10) comprend un élément de sollicitation (16) pour solliciter la soupape (10) dans une première position, dans laquelle la sortie (10b) est reliée à l'échappement (10c) et l'orifice de commande (10d) est actionné par pression de fluide de telle sorte que lorsque la pression requise est présente au niveau de l'orifice de commande (10d), la soupape (10) soit poussée dans une seconde position dans laquelle l'entrée (10a) est reliée à la sortie (10b).

12. Système de freinage de remorque selon l'une quelconque des revendications précédentes, dans lequel le moyen d'immobilisation (80) comprend une entrée (84a), une sortie (84b) et un orifice de commande (89), l'entrée (84a) étant reliée à la conduite d'alimentation (44) et la sortie (84b) étant reliée à l'orifice de commande (89) du moyen d'immobilisation et à l'orifice de commande (10d) de la soupape de commande de frein à ressort (10), et éventuellement
dans lequel le moyen d'immobilisation (80) comprend un élément de sollicitation (90) pour solliciter le moyen d'immobilisation (80) dans une première position, dans laquelle un clapet anti-retour interne (84c) empêche l'écoulement de fluide vers la sortie (84b) et dans laquelle, éventuellement, la sortie (84b) est reliée à un échappement et l'orifice de commande (89) est actionné par pression de fluide de telle sorte que lorsque la pression requise est présente au niveau de l'orifice de commande (89), la soupape soit poussée dans une seconde position dans laquelle l'entrée (84a) est reliée à la sortie (84b).

13. Système de freinage de remorque selon la revendication 12, comprenant une soupape de remplacement de freinage d'urgence (54) comprenant une première entrée (54a), une seconde entrée (54c) et une sortie (54b), la première entrée (54a) étant reliée à la sortie (84b) du moyen d'immobilisation et la seconde entrée (54c) étant reliée à la conduite d'alimentation (44), éventuellement par l'intermédiaire d'un réservoir de remorque (40), et la sortie (54b) étant reliée aux orifices de commande du moyen d'immobilisation (89, 89') et de la soupape de commande de frein à ressort (10d), et éventuellement
la soupape de remplacement de freinage d'urgence (54) comprenant un élément de sollicitation pour solliciter la soupape dans une première position, dans laquelle la première entrée (54a) est reliée à la sortie (54b), et étant actionnable électriquement pour forcer la soupape contre l'élément de sollicitation dans une seconde position, dans laquelle la seconde entrée (54c) est reliée à la sortie (54b).

14. Remorque comprenant un système de freinage de remorque selon l'une quelconque des revendications 1 à 13.
